# EUROPEAN PATENT SPECIFICATION

(11) **EP 3 199 233 B1**
(45) Date of publication and mention of the grant of the patent: **05.12.2018**
(21) Application number: 14902885.4
(22) Date of filing: 25.09.2014
(51) Int. Cl.: B01J 20/02, B01D 15/20, G01N 30/60, G01N 1/40, B01D 15/08, B01J 20/22, B01J 20/281

(54) **PREPARATION METHOD OF A SOLID PHASE EXTRACTION COLUMN COMPRISING GRAPHENE OR MODIFIED GRAPHENE**
HERSTELLUNGSVERFAHREN EINER FESTPHASENEXTRAKTIONSSÄULE ENTHALTEND GRAPHEN ODER MOFIZIERTER GRAPHEN
PROCÉDÉ DE PRÉPARATION D'UNE COLONNE D'EXTRACTION EN PHASE SOLIDE COMPRENANT DU GRAPHÈNE OU DU GRAPHÈNE MODIFIÉ

(43) Date of publication of application: 02.08.2017
(73) Proprietor: Shenzhen Cantonnet Energy Services Co. , Ltd., Shenzhen, Guangdong 518000 (CN)
(72) Inventor: ZHANG, Mingdong, Shenzhen Guangdong 518107 (CN); ZHANG, Linde, Shenzhen Guangdong 518107 (CN)
(74) Representative: Sun, Yiming
(86) International application number: PCT/CN2014/087391
(87) International publication number: WO 2016/045032

(56) References cited:
- CN-A- 103 638 693
- CN-A- 103 728 394
- CN-A- 103 833 019
- US-A1- 2011 210 056
- ZONGHUA WANG ET AL: "Graphene-based solid-phase extraction disk for fast separation and preconcentration of trace polycyclic aromatic hydrocarbons from environmental water samples : Sample Preparation", JOURNAL OF SEPARATION SCIENCE., vol. 36, no. 11, 1 June 2013 (2013-06-01), pages 1834-1842, XP055398563, DE ISSN: 1615-9306, DOI: 10.1002/jssc.201300186
- SHI ZHIHONG ET AL: "Graphene based solid phase extraction combined with ultra high performance liquid chromatography-tandem mass spectrometry for carbamate pesticides analysis in environmental water sam", JOURNAL OF CHROMATOGRAPHY A, vol. 1355, 12 June 2014 (2014-06-12), pages 219-227, XP029034365, ISSN: 0021-9673, DOI: 10.1016/J.CHROMA.2014.05.085
- KE-JING HUANG ET AL: "Spectrofluorimetric determination of glutathione in human plasma by solid-phase extraction using graphene as adsorbent", SPECTROCHIMICA ACTA. PART A: MOLECULAR AND BIOMOLECULAR SPECTROSCOPY, ELSEVIER, AMSTERDAM, NL, vol. 79, no. 5, 24 May 2011 (2011-05-24), pages 1860-1865, XP028379586, ISSN: 1386-1425, DOI: 10.1016/J.SAA.2011.05.076 [retrieved on 2011-05-31]
- GUAN WENBI ET AL: "Amine modified graphene as reversed-dispersive solid phase extraction materials combined with liquid chromatography-tandem mass spectrometry for pesticide multi-residue analysis in oil crops", JOURNAL OF CHROMATOGRAPHY A, ELSEVIER, AMSTERDAM, NL, vol. 1286, 20 February 2013 (2013-02-20), pages 1-8, XP028524745, ISSN: 0021-9673, DOI: 10.1016/J.CHROMA.2013.02.043
- HONG ZHANG ET AL: "Evaluation of sulfonated graphene sheets as sorbent for micro-solid-phase extraction combined with gas chromatographymass spectrometry", JOURNAL OF CHROMATOGRAPHY A, ELSEVIER, AMSTERDAM, NL, vol. 1233, 8 February 2012 (2012-02-08), pages 16-21, XP028472918, ISSN: 0021-9673, DOI: 10.1016/J.CHROMA.2012.02.020 [retrieved on 2012-02-16]
- WANG, LINGLING ET AL.: 'Determination of polycyclic aromatic hydrocarbons in water based on graphene solid-phase extraction' CHEMISTRY vol. 75, no. 7, 31 July 2012, pages 648 - 652, XP008184577

## Description

### Technical field

The present invention relates to a technical filed of the solid phase extraction, particularly relating to a solid phase extraction column, preparation method therefor, and pre-processing method of chemical sample based on solid phase extraction column.

### Background

In the chemical sample detection and analysis work, especially for the natural samples, the most common problem is that the components of the sample are usually too complex, and cannot be directly analyzed by chromatographic analysis, or have a bad result via the direct analysis. Therefore, it is necessary for the chemical sample to be preprocessed to separate the object to be tested, and then to be chromatographically analyzed. At present, the most commonly used chemical sample preprocessing technology is a solid phase extraction (SPE) technology. That is, adsorption and extraction is realized by the affinity between a specific constituent of the components and a solid phase extraction agent, so as to achieve separation of the specific constituent. Therefore, a selection of the solid phase extraction agent is very important. The polarity, the specific functional groups, the surface pore size distribution, specific surface area, etc. of the solid phase extraction agent, directly determine the extraction efficiency and selectivity of the whole SPE process.

Traditionally, the solid phase extraction is generally organic or inorganic materials, such as carbon eighteen (i.e. silica gel modified by long chain alkyl), graphitized carbon black, polystyrene microspheres, etc. Wang et al., J. Sep. Sci, 2013, 36, 1834-1842, discloses graphene-based solid-phase extraction disc, a method of its preparation and use thereof for fast separation of and preconcentration of trace polycyclic aromatic hydrocarbons from environmental water samples. The sample is contacted with the SPE disk after activation (preconditioning) with cyclohexane and methanol, and it is then eluted with cyclohexane.

The traditional solid phase extraction agent has disadvantages of a high filling density, a large usage amount, a big waste during the analysis process, and a high cost, etc. The serious problem is that, adsorption degree of a micro constituent in the sample onto the solid phase extraction is high, because of the large usage amount of the traditional solid phase extraction agent. As a result, the data of the micro constituent cannot be detected in the subsequent detection, or the real value cannot be detected, so as to cause a data distortion.

### Summary of the Invention

In view of this, it is necessary to provide a solid phase extraction column to pre-process the chemical sample, so as to avoid the problem that the target components cannot be detected in the subsequent detection, or the real value cannot be detected, leading to the data distortion.

A solid phase extraction column includes a separation column and a solid phase extraction agent filled within the separation column. The solid phase extraction agent is graphene or modified graphene. The graphene is single-layer graphene or multi-layer graphene, and the modified graphene is selected from at least one of aminated graphene, carbonylated graphene, cyanided graphene, nitro-graphene, boric acid graphene, phosphorylated graphene, hydroxy graphene, thiol graphene, methylated graphene, allylated graphene, trifluoro methylated graphene, dodecylated graphene, octadecyl graphene, fluorinated graphene, brominated graphene, chlorinated graphene and iodinated graphene.

Specifically, the separation column includes a hollow polypropylene plastic column and two porous alumina sieve plates, which are removably arranged inside the polypropylene plastic column. The solid phase extraction agent is filled between the two porous alumina sieve plates.

A preparation method of the solid phase extraction column according to the present invention includes the following steps:
Selecting one solid phase extraction agent from a plurality of solid phase extraction agents to be selected. The solid phase extraction agents to be selected are graphene or modified graphene. The graphene is single-layer graphene or multi-layer graphene; the modified graphene is selected from at least one of aminated graphene, carbonylated graphene, cyanided graphene, nitro-graphene, boric acid graphene, phosphorylated graphene, hydroxy graphene, thiol graphene, methylated graphene, allylated graphene, trifluoro methylated graphene, dodecylated graphene, octadecyl graphene, fluorinated graphene, brominated graphene, chlorinated graphene and iodinated graphene.

The selected solid phase extraction agent is loaded into the separation column. The separation column filled with the selected solid phase extraction agent is vibrated for 3 min on a shaking table, and the solid phase extraction agent is compacted to obtain the solid phase extraction column.

In one of the embodiments, the specific method of selecting one from the plurality of solid phase extraction agents to be selected includes:
The various solid phase extraction agents to be selected are respectively prepared to form a plurality of dispersive liquids of each solid phase extraction agent, and a pure product of target components detected in a sample to be tested is prepared to form a plurality of dispersive liquids of the target components. The plurality of dispersive liquids of each solid phase extraction agent is mixed with the plurality of dispersive liquids of the target components to obtain a plurality of mixtures. Then each of the mixtures is ultrasonic dispersed. A solid phase extraction agent in the mixture with the lowest sedimentation level is selected after the mixtures settle.

The plurality of solid phase extraction agents to be selected are graphene or modified graphene. The graphene is single-layer graphene or multi-layer graphene; the modified graphene is selected from at least one of aminated graphene, carbonylated graphene, cyanided graphene, nitro-graphene, boric acid graphene, phosphorylated graphene, hydroxy graphene, thiol graphene, methylated graphene, allylated graphene, trifluoro methylated graphene, dodecylated graphene, octadecyl graphene, fluorinated graphene, brominated graphene, chlorinated graphene and iodinated graphene.

Also disclosed herein is a pre-processing method of chemical sample based on solid phase extraction column including the following steps:
The solid phase extraction column is activated;
A chemical sample to be pre-processed is loaded into the activated solid phase extraction column;
The solid phase extraction column is eluted by an eluting reagent;
And the solid phase extraction column is eluted by an eluent to obtain the eluting solution.

Specifically, the specific operations of activating the solid phase extraction column: An activating agent is loaded into the solid phase extraction column, wherein the volume of the activating agent is 1/8-1 times the volume of the separation column. The activating agent is selected from at least one of methanol, ethanol, isopropanol, acetonitrile, ethyl acetate, trichloromethane, dichloromethane, carbon tetrachloride, ethyl ether, methylbenzene, benzene, cyclohexane, petroleum ether, hexane, pentane, hydrochloric acid solution with a mass fraction of 37% and sodium hydroxide solution with a mass fraction of 40%.

Specifically, the volume of the chemical sample to be pre-processed is 1/8-1 times the volume of the separation column.

Specifically, the volume of the eluting reagent is 1/8-1 times the volume of the separation column. The eluting reagent is selected from at least one of methanol, ethanol, isopropanol, acetonitrile, ethyl acetate, trichloromethane, dichloromethane, carbon tetrachloride, ethyl ether, methylbenzene, benzene, cyclohexane, petroleum ether, hexane, pentane, hydrochloric acid solution with a mass fraction of 37% and sodium hydroxide solution with a mass fraction of 40%.

Specifically, the volume of the eluent is 1/8-1/2 of the volume of the separation column. The eluent is selected from at least one of methanol, ethanol, isopropanol, acetonitrile, ethyl acetate, trichloromethane, dichloromethane, carbon tetrachloride, ethyl ether, methylbenzene, benzene, cyclohexane, petroleum ether, hexane, and pentane.

Specifically, the pre-processing method also includes the steps of processing the eluting solution. The specific steps of processing the eluting solution are provided: The eluting solution is blow-dried with nitrogen to obtain a dried product, then the dried product is solved in a constant volume of the eluent.

The solid phase extraction column uses graphene or modified graphene as the solid-phase extraction agent, making good use of selective adsorption properties of the graphene and the modified graphene (i.e. the functionalized graphene). The graphene and differently functionalized graphene material have different selectivity for different elements, polarities and the structures. The chemical samples are pre-processed by means of the solid phase extraction column to effectively stabilize various components of the system under test. And various components are sectionally dissociated from the graphene or modified graphene according to the differences of the affinity degree, so as to realize the efficient separation effects to avoid the data distortion problem, caused by the target components in the subsequent detection being unable to be detected or the real value being unable to be detected.

### Brief Description of the Drawings

Figure 1 is a structural schematic diagram of the solid phase extraction column of one implementation.
Figure 2 is a flow chart of the pre-processing method based on the solid phase extraction of one implementation.
Figure 3 is a liquid chromatogram of embodiment 1.
Figure 4 is a liquid chromatogram of embodiment 2.
Figure 5 is a liquid chromatogram of embodiment 3.
Figure 6 is a liquid chromatogram of embodiment 4.
Figure 7 is a liquid chromatogram of embodiment 5.
Figure 8 is a liquid chromatogram of embodiment 6.

### Detailed Description of the Invention

In order to make the purpose, characteristics and advantages of the present invention more clearly understandable, the embodiments of the invention will be further described in detail with reference to the accompanying drawings.

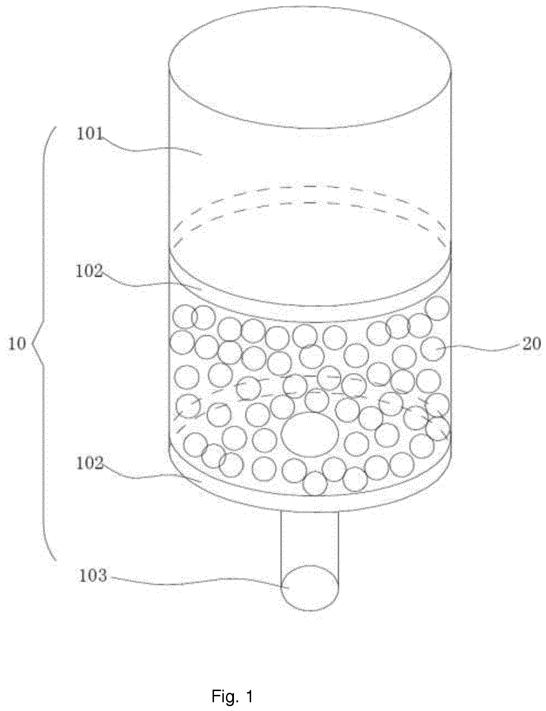

Referring to figure 1, the solid phase extraction column of one embodiment, includes separation column 10 and solid phase extraction agent 20 filled within separation column 10.

Separation column 10 includes hollow column 101 and two porous sieve plates 102 removably arranged inside hollow column 101 (the holes of porous sieve plates 102 not shown in figure 1). Solid phase extraction agent 20 is filled between two porous sieve plates 102.

In this embodiment, hollow column 101 is a polypropylene plastic column and porous sieve plates 102 are porous alumina plates.

It can be understood that in other embodiments, hollow column 101 is not limited to the polypropylene plastic column, and also can be a column made of other materials, such as a polypropylene column. Porous sieve plates 102 are not limited to the porous alumina plates either, and also can be a porous sieve plate made of other materials, such as a porous polypropylene sieve plate, a porous fiberglass sieve plate etc.

Column cap 103 is provided at one end of hollow column 101. Column cap 103 is cylindrical and provided with an opening at each end. Column cap 103 is connected to porous sieve plates 102.

Solid phase extraction agent 20 is graphene or modified graphene. Graphene or modified graphene itself can work as a carrier and an adsorbent, and can be filled in separation column 10 without other carriers or a crosslinking agent, which makes the preparation of the solid phase extraction column easy and have low preparation cost. Further, the target components can be captured effectively by simply using the graphene or modified graphene as the solid phase extraction agent, without combining with other types of solid phase extraction agents, such as silica gel modified by long chain alkyl, graphitized carbon black, or polystyrene microspheres, etc., which can effectively avoid the data distortion problem caused by over dosage of the traditional solid phase extraction agent, such as silica gel modified by long chain alkyl, graphitized carbon black, or polystyrene microspheres, etc., leading to a high adsorption degree of a micro constituent in the sample.

The density of the graphene is extremely low, and the specific surface area of the graphene is high. Also, the chemical properties of the graphene are stable. Compared with the traditional solid phase extraction agents, such as a silica based solid phase extraction agent, the use of the graphene can greatly reduce the amount of extraction agent and be no longer sensitive to the Ph value of the sample, and thus can effectively expand the scope of its application and achieve the excellent separation effects. Moreover, the graphene has good adsorption properties to nonpolar molecules, especially for molecules with an aromatic ring through π-π interactions, to further separate other nonpolar molecules.

The graphene is single-layer graphene or multi-layer graphene.

A certain modification is given to the graphene to obtain more different options and can be used for pre-processing different chemical samples. The modified graphene is selected from at least one of aminated graphene, carbonylated graphene, cyanided graphene, nitro-graphene, boric acid graphene, phosphorylated graphene, hydroxy graphene, thiol graphene, methylated graphene, allylated graphene, trifluoro methylated graphene, dodecylated graphene, octadecyl graphene, fluorinated graphene, brominated graphene, chlorinated graphene and iodinated graphene.

The modified graphene is referred to as the functionalized graphene. For example, the aminated graphene is referred to as introducing the amino into the graphene, the carbonylated graphene is referred to as introducing the carboxyl into the graphene, and the fluorinated graphene is referred to as introducing the fluorine atoms into the graphene.

The functionalized graphene has selective adsorption properties, and different functionalized graphene materials have different selectivity to different elements, polarities, and structures. The different functionalized graphene is used as an adsorbent according to different target molecules to obtain a better separation effect. For example, the aminated graphene can provide a strong hydrogen bond, so that the polar molecules with protons can be adsorbed via the hydrogen bond, while the nonpolar molecule is hard to be adsorbed.

When there is only one target component in a sample, a modified graphene is selected as the solid phase extraction agent. When there are at least two types of target components in a sample, at least two types of modified graphene can be selected as the solid phase extraction agents according to the properties of the two types of target components. In the case of at least two types of target components available, the different graphene materials can be selected according to the polarities and group structures of the two components.

In the solid phase extraction column described above, the graphene or the modified graphene is used as the solid phase extraction agent, utilizing strong adsorption effects between the graphene or the modified graphene and the target component to be detected, so that the solid phase extraction column has a adhesion capacity for certain target component to be detected, while the solid phase extraction column has no adsorption capacity to detected non-target components. Thus, trace or small amounts of the target component to be detected in the sample can be effectively captured, and the detection of the specific content of the target component can be obtained in the subsequent chromatographic analysis. The data distortion problem, caused by the data being unable to be detected during the subsequent detection or the real value being unable to be detected, is avoided.

Furthermore, since the density of the graphene or the modified graphene is low, and thus can effectively reduce the dosage of the graphene or the modified graphene in the solid phase extraction column. Hence, not only the micro component of the system to be tested can be detected, but also the waste of the solid phase extraction agent can be reduced, which is beneficial to save costs.

A preparation method of the solid phase extraction column in one embodiment is used to prepare the solid phase extraction column described above. The preparation method of the solid phase extraction column includes the following steps 110-120.

Step 110: selecting one from a plurality of solid phase extraction agents to be selected.

The solid phase extraction agent to be selected is graphene or modified grapheme, wherein the graphene is single-layer graphene or multi-layer graphene. The modified graphene is selected from at least one of aminated graphene, carbonylated graphene, cyanided graphene, nitro-graphene, boric acid graphene, phosphorylated graphene, hydroxy graphene, thiol graphene, methylated graphene, allylated graphene, trifluoro methylated graphene, dodecylated graphene, octadecyl graphene, fluorinated graphene, brominated graphene, chlorinated graphene and iodinated graphene.

In the case of an available pure product of the target component to be detected, a sedimentation experiment is conducted to select a proper solid phase extraction agent.

Sedimentation experiment includes the following steps:
The plurality of solid phase extraction agents to be selected are prepared to form a plurality of dispersive liquids corresponding to the solid phase extraction agents respectively, and a pure product of the target component detected in a sample to be tested is prepared to form a plurality of dispersive liquids of the target components. The plurality of dispersive liquids of the solid phase extraction agents are mixed with the plurality of dispersive liquids of the target components to obtain a plurality of mixtures. Each of the mixture is ultrasonic dispersed, and then a solid phase extraction agent in the mixture with the lowest sedimentation level is selected.

The graphene or the modified grapheme in the mixture with the lowest sedimentation level has a good adsorption property to the target component, therefore, the solid phase extraction agent in the mixture with the lowest sedimentation level is selected.

The deionized water is preferably selected as solvents for both the dispersive liquid of the solid phase extraction agent and the dispersive liquid of the target component. When the solubility of the target component is low in the deionized water, selecting at least one from methanol, ethanol, isopropanol, acetonitrile , ethyl acetate , trichloromethane , dichloromethane , carbon tetrachloride , ethyl ether, methylbenzene , benzene , cyclohexane, petroleum ether, hexane, pentane, hydrochloric acid solution with a mass fraction of 37% and sodium hydroxide solution with a mass fraction of 40% as the solvents for the dispersive liquids.

Since the solubility of the modified graphene is higher in the water, in order to correctly reflect the absorption degree of the target component through the modified graphene, preferably, a plurality of solid phase extraction agents to be selected are prepared to form a plurality of dispersive liquids of the solid phase extraction agents respectively, at a concentration of 0.1mg/mL-0.5mg/mL. Then a pure product of the target components detected in a sample to be tested, combined with the above solvent, is prepared to form a series of dispersive liquids of the target component at a concentration of 0.5mg/mL-5mg/mL, with 0.5mg/mL as a gradient. The plurality of dispersive liquids of the solid phase extraction agents are mixed with a series of dispersive liquids of the target components at a volume ratio in a proportion of 1:1, so as to obtain a plurality of mixtures. 1mL-5mL of each mixture is taken to be ultrasonically dispersed. A solid phase extraction agent in the mixture with the lowest sedimentation level is selected after the mixtures settle.

Preferably, a sedimentation method of the mixture is to conduct static sedimentation for 30min∼60min or to conduct centrifugal sedimentation at a rotation rate of 3000r/min∼4000r/min for 0.5min∼2min.

Through detecting the sedimentation level (i.e. dispersion degree) of the above graphene or the modified graphene in the pure product of the target component to be detected, the adsorption intensity between the graphene or the modified graphene and the target component to be detected is determined, and the relationship between the selected graphene or the modified graphene and the target component to be detected also can be quickly and easily determined, which is beneficial for the selective adsorption of the target component and vacuum reliability of the subsequent chromatographic analysis data.

In case, no pure product of the target components to be detected is available, the graphene or modified graphene is selected according to an approximate polarity of the target component to be detected. When the polarity of the molecule is higher, the polarity of the selected graphene or modified graphene should be higher to have a strong adsorption effect to the target component.

Step 120: The selected solid phase extraction agent is loaded into separation column 10, and separation column 10 filled with the selected solid phase extraction agent is vibrated for 3 min on a shaking table, and then the solid phase extraction agent is compacted to obtain the solid phase extraction column.

The solid phase extraction agent is loosely loaded into separation column 10. Preferably, a volume of the solid phase extraction agent is 1/5-1/8 of a volume of separation column 10. Specifically, one porous sieve plate 102 is loaded into separation column 10 to seal one end of separation column 10, and then the solid phase extraction agent is loaded. The other porous sieve plate 102 is then forced into separation column 10 to seal the other end of separation column 10. Separation column 10 filled with the solid phase extraction agent is then vibrated on shaking table for 3 min. After that, porous sieve plate 102 is gently pressed to compact the solid phase extraction agent to obtain the solid phase extraction column.

The preparation method of the solid phase extraction column is simple and the preparation is convenient.

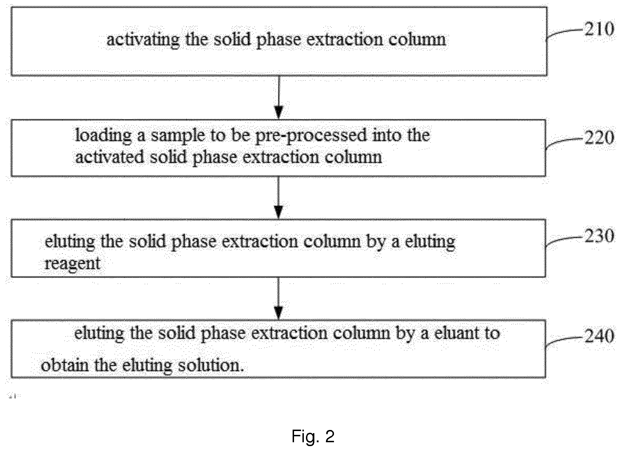

Referring to figure 2, a pre-processing method of the chemical sample based on solid phase extraction in one embodiment includes the following step 210 to step 240.

Step 210: the solid phase extraction column described above is activated.

Specific operations of activation are provided: An activating agent is loaded into the solid phase extraction column. The goal of the activation is to moisten the solid phase extraction agent to adsorb the target component.

Preferably, the volume of the activating agent is 1/8-1 times the volume of separation column 10. A flow rate of the activating agent is 0.5mL/min-2mL/min.

Preferably, the activating agent is selected from at least one of deionized water, methanol, ethanol, isopropanol, acetonitrile, ethyl acetate, trichloromethane, dichloromethane, carbon tetrachloride, ethyl ether, methylbenzene, benzene, cyclohexane, petroleum ether, hexane, pentane, hydrochloric acid solution with a mass fraction of 37% and sodium hydroxide solution with a mass fraction of 40%. Further preferably, the activating agent is selected from at least one of methanol, ethyl acetate, ethanol, acetonitrile, trichloromethane, dichloromethane, petroleum ether, hydrochloric acid solution with a mass fraction of 37% and sodium hydroxide solution with a mass fraction of 40%.

The graphene or modified graphene is used as the solid phase extraction agent. The graphene or modified graphene is not sensitive to pH value, and the pH value of the activating agent within a range of 0-14 is applicable.

Step 220: A chemical sample to be pre-processed is injected into the activated solid phase extraction column.

A target component is contained in the chemical sample to be pre-processed. If the chemical sample to be processed is a solution, the sample is loaded directly. If the chemical sample to be processed is solid, the chemical sample should be prepared to form a solution first and then the sample is loaded. The selected solvent is a solvent which can dissolve the target component.

The chemical sample to be processed is put into separation column 10, so that the chemical sample to be processed flows slowly through the solid phase extraction agent and thus is loaded. Preferably, a volume of the eluent is 1/8-1 times the volume of separation column 10. A flow rate of the eluent is 0.1mL/min-1mL/min.

Step 230: The solid phase extraction column is eluted by an eluting reagent.

After loading the sample, the target component is adsorbed by the solid phase extraction agent. The solid phase extraction column is eluted by the eluting reagent to remove the impurities that are not adsorbed by the solid phase extraction agent. After eluting, the effluent produced during eluting is discarded.

Preferably, a volume of the eluting reagent is 1/8-1 times the volume of separation column 10. A flow rate of the eluting reagent is 0.1mL/min-1mL/min.

The polarity of the eluting reagent is opposite to that of the solvent of the chemical sample to be pre-processed. Preferably, the eluting reagent is selected from at least one of deionized water, methanol, ethanol, isopropanol, acetonitrile, ethyl acetate, trichloromethane, dichloromethane, carbon tetrachloride, ethyl ether, methylbenzene, benzene, cyclohexane, petroleum ether, hexane, pentane, sodium carbonate solution with a mass fraction of 10%, hydrochloric acid with a mass fraction of 37% and sodium hydroxide solution with a mass fraction of 40%.

Further, preferably, the eluting reagent is selected from at least one of deionized water, sodium carbonate solution with a mass fraction of 10%, methanol, ethyl acetate, ethanol, acetonitrile, trichloromethane, dichloromethane, petroleum ether, hydrochloric acid solution with a mass fraction of 37% and sodium hydroxide solution with a mass fraction of 40%.

Step 240: The solid phase extraction column is eluted by an eluent to obtain an eluted solution.

The solid phase extraction column is eluted by the eluent to separate the target component adsorbed to the solid phase extraction column.

The eluent is injected into separation column 10, making the eluent slowly flow into the solid phase extraction agent, so as to desorb the target component to obtain the eluted solution. The obtained eluted solution can be used for chromatographic analysis.

Preferably, a volume of the eluent is 1/8-1/2 of a volume of separation column 10. A flow rate of the eluent is 0.1mL/min-1mL/min.

A volume of separation column 10 described above is referred to as a volume of hollow column 101.

Preferably, after obtaining the eluted solution, the eluted solution is blow-dried by nitrogen, then a constant volume of the dried product is solved in 1mL∼10mL of eluent. After solving, the solution is sent into a subsequent detective device (e.g. liquid chromatograph, etc.) for analysis.

The solvent above is selected from at least one of deionized water, methanol, ethanol, isopropanol, acetonitrile, ethyl acetate, trichloromethane, dichloromethane, carbon tetrachloride, ethyl ether, methylbenzene, benzene, cyclohexane, petroleum ether, hexane, pentane. Preferably, the organic solvent is selected from at least one of methanol, ethyl acetate, ethanol, acetonitrile, trichloromethane, dichloromethane, petroleum ether.

In the pre-processing method of chemical sample based on the solid phase extraction, by means of a strong adsorption effect between the graphene or the modified graphene and the target component, the solid phase extraction column has a adhesion capacity for a certain target component, while the solid phase extraction column has no adsorption capacity to non-target component. Thus, trace or small amounts of the target component in the sample can be effectively captured, and the detection of the specific content can be obtained in the subsequent chromatographic analysis. Therefore, the data distortion problem, caused by the real value of the target component being unable to be detected, is avoided.

Furthermore, in the pre-processing method of chemical sample based on the solid phase extraction, the graphene or the modified graphene is used as the solid phase extraction agent to effectively reduce the dosage of the solid phase extraction agent, so that the waste and the cost in the analysis process are reduced.

A diazonium salt method reported by LomedaJR, DoyleCD, KosynkinDV, HwangWF, TourJ M.J. Am. Chem. Soc., 2008, 130:16201-16206 is used by most of the modified graphene to perform functionalized modification.

For example, the dodecylated graphene is obtained by modifying the graphene, using dodecylphenyl diazonium salt as an alkylation reagent. The carbonylated graphene is obtained by modifying the graphene, through conducting a hydrolysis for a carbonylation after reacting with diazoformate.

The aminated graphene is obtained by modifying the graphene, using azidation-reduction reported in Krabbenborg S, Naber W J M, Velders A H, Reinhoudt D N, Wiel W G. Chem-Eur J., 2009, 15:8235-8240 to conduct amination. The hydroxy graphene is obtained by modifying the graphene, using a method of a selective reduction-oxidation of the graphene by sodium borohydride to conduct hydroxylation .

The embodiments are provided as below.

### Embodiment 1

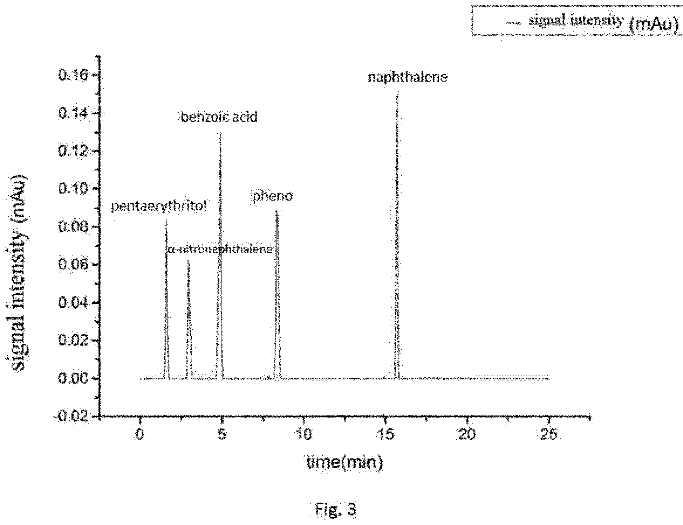

1. According to the polarity of the component, multi-layer graphene is used as a solid phase extraction agent. The multi-layer graphene is loosely loaded into a polypropylene plastic column with one end sealed with a porous alumina sieve plate. A volume of the solid phase extraction agent is 1/5 of a volume of the polypropylene plastic column, and then the polypropylene plastic column is sealed by another porous alumina sieve plate. The polypropylene plastic column filled with the multi-layer graphene is vibrated on a shaking table for 3 min, and then the porous alumina sieve plate is gently pressed to compact the solid phase extraction agent, in order to obtain a solid phase extraction column.
2. The working solutions of α-nitronaphthalene, pheno, pentaerythritol, benzoic acid, and naphthalene are respectively prepared. The solvent for each working solution is dichloromethane at a concentration of 100ug / L, then methyl red at a concentration of 1mg / L is added as an impurity component.
3. Methanol is added into the solid phase extraction column to activate the solid phase extraction column. A flow rate of the methanol is 1mL / min. A volume of the methanol is 1/8 of a volume of the polypropylene plastic column.
4. 100 mL of the working solutions are taken respectively and injected into the solid phase extraction column after activation, to load the sample. A volume of the working solution is 1/8 of a volume of the polypropylene plastic column and a flow rate is 1mL / min.
5. The solid phase extraction agent is eluted with ethanol, and a volume of ethanol is 1/8 of a volume of the polypropylene plastic column and a flow rate is 1 mL / min.
6. 0.5 mL of a mixed solution of acetonitrile and petroleum ether at a volume ratio of 1: 1 is eluted to obtain an eluted solution. A volume of the mixed solution is 1/8 of a volume of the polypropylene plastic column and a flow rate of the mixed solution is 0.5 mL / min.
7. The eluted solution is dried by nitrogen to obtain a dried product, and then 1mL of ethanol is used for solving it. 20uL of the sample is taken for liquid chromatography analysis (using an Agilent 1100 High Performance Liquid Chromatography Station with a mixed solvent of acetonitrile and water at a volume ratio of 1:1 as a mobile phase, at a flow rate of 0.5mL / min), and the resulting spectrum is shown in Figure 3.

As shown in Figure 3, the solid phase extraction column, using multi-layer graphene as a solid phase extraction agent, can be used to selectively capture and dissociate the above target components very well, and remove an impurity of methyl red in a better way.

### Embodiment 2

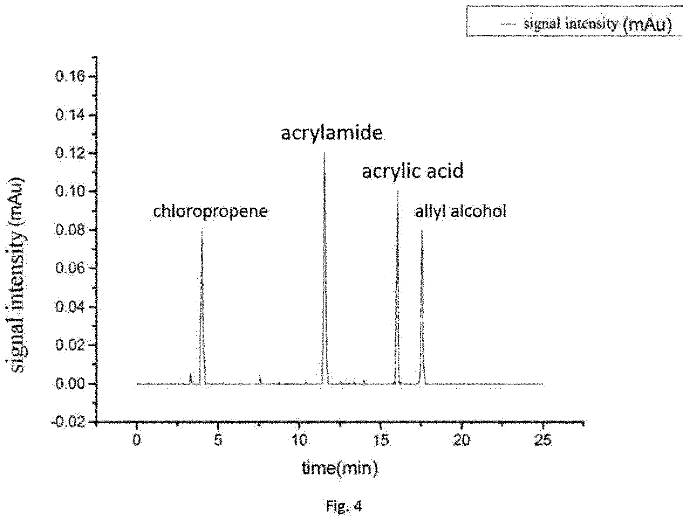

1. According to the polarity of the component, the hydroxy graphene is used as a solid phase extraction agent. The hydroxy graphene is loosely loaded into a polypropylene plastic column with one end sealed with a porous alumina sieve plate. A volume of the solid phase extraction agent is 1/8 of a volume of the polypropylene plastic column, then the polypropylene plastic column is sealed by another porous alumina sieve plate. The polypropylene plastic column filled with the hydroxy graphene is vibrated on a shaking table for 3 min, and then the porous alumina sieve plate is gently pressed to compact the solid phase extraction agent, in order to obtain a solid phase extraction column.
2. The working solutions of chloropropene, acrylamide, acrylic acid, and allyl alcohol are respectively prepared. The solvent for each solution is methanol, at a concentration of 100ug / L, then janus green B at a concentration of 1mg / L is added as an impurity component.
3. A mixed solvent of ethyl acetate and ethanol at a volume ratio of 1: 1 is added into the solid phase extraction column to activate the solid phase extraction column, at a flow rate of 1.5 mL / min. The volume of the mixed solvent is 1/8 of a volume of the polypropylene plastic column.
4. 100 mL of the working solutions are taken respectively and injected into the solid phase extraction column after activation, to load the sample. A volume of the working solution is 1 time the volume of the polypropylene plastic column and a flow rate is 1 mL / min.
5. The solid phase extraction agent is eluted with isopropanol, and a volume of isopropanol is 1 time the volume of the polypropylene plastic column and a flow rate is 0.5 mL / min.
6. 0.5 mL of a mixed solution of ethyl acetate and dichloromethane at a volume ratio of 2: 1 is eluted to obtain an eluted solution. A volume of the mixed solution is 1/8 of a volume of the polypropylene plastic column and a flow rate of the mixed solution is 1 mL / min.
7. The eluted solution is dried by nitrogen to obtain a dried product, and then 1mL of acetonitrile is used for solving it. 20uL of the sample is taken for liquid chromatography analysis (using an Agilent 1100 High Performance Liquid Chromatography Station, with a mixed solvent of methanol and water at a volume ratio of 4:1 as a mobile phase, at a flow rate of 0.5mL / min), the resulting spectrum is shown in Figure 4.

As shown in Figure 4, the solid phase extraction column, using the hydroxy graphene as a solid phase extraction agent, can be used to selectively capture and dissociate the above target components very well, and remove the impurity of janus green B in a better way.

### Embodiment 3

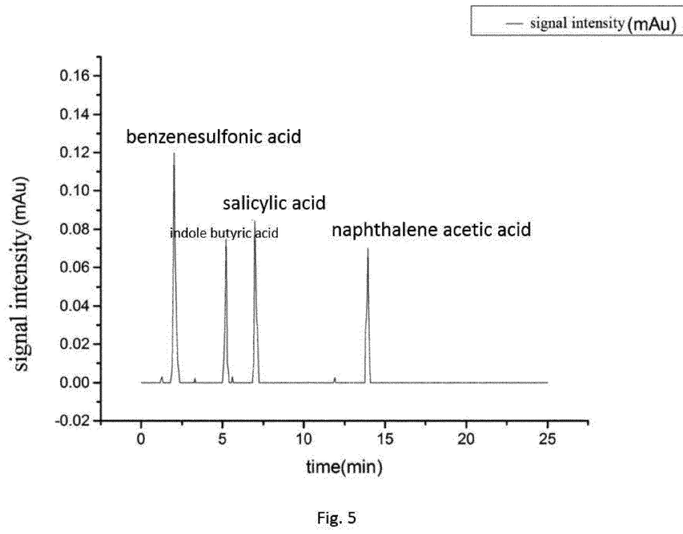

1. A plurality of solid phase extraction agents to be selected are added into ethanol to prepare a plurality of dispersive liquids of the solid phase extraction agents at a concentration of 0.1 mg / mL. Then pure products of the detected target components in the sample to be detected, combined with the solvent, to prepare a series of dispersive liquids of the target components, with a gradient of 0.5 mg / mL, at a concentration of 0.5 mg / mL to 5 mg / mL. Wherein the pure products of the target components are respectively naphthalene acetic acid, indole butyric acid, salicylic acid and benzenesulfonic acid. The dispersive liquids of solid phase extraction agents and the dispersive liquids of the target components are mixed at a volume ratio of 1: 1 respectively to obtain a plurality of mixtures. 1 mL of each mixture is taken to be ultrasonically dispersed. After the mixture is settled for 30 minutes, the mixture containing aminated graphene has the lowest sedimentation level, and thus the aminated graphene is selected as a solid phase extraction agent.
2. The aminated graphene is used as a solid phase extraction agent. The aminated graphene is loosely loaded into a polypropylene plastic column with one end sealed with a porous alumina sieve plate. A volume of the solid phase extraction agent is 1/6 of a volume of the polypropylene plastic column. The polypropylene plastic column is then sealed by another porous alumina sieve plate. The polypropylene plastic column filled with the hydroxy graphene is vibrated on a shaking table for 3 min, and then the porous alumina sieve plate is gently pressed to compact the solid phase extraction agent, in order to obtain a solid phase extraction column.
3. The working solution of naphthalene acetic acid, indole butyric acid, salicylic acid and benzenesulfonic acid are respectively prepared. The solvent for each working solution is ethanol, at a concentration of 100ug / L. Xylene cyanol FF is then added as an impurity component, at a concentration of 1mg / L.
4. The acetonitrile is added into the solid phase extraction column to activate the solid phase extraction column, at a flow rate of 1 mL / min. A volume of the acetonitrile is 1 time the volume of the polypropylene plastic column.
5. 100 mL of the working solutions are taken and injected respectively into the solid phase extraction column after activation, to load the sample. A volume of each working solution is 1 time the volume of the polypropylene plastic column and a flow rate is 0.1 mL / min.
6. The solid phase extraction agent is eluted with isopropanol. A volume of isopropanol is 1 time the volume of the polypropylene plastic column and a flow rate is 0.8 mL / min.
7. 0.5 mL of a mixed solution of acetonitrile and water at a volume ratio of 1: 1 is eluted to obtain an eluted solution. A volume of the mixed solution is 1/2 of the volume of the polypropylene plastic column and a flow rate of the mixed solution is 0.1 mL / min.
8. The eluted solution is dried by nitrogen to obtain a dried product, and then 1mL of ethyl acetate is used for solving it, and 20uL of sample is taken for liquid chromatography analysis (using an Agilent 1100 High Performance Liquid Chromatography Station, with a mixed solvent of acetonitrile and water at a volume ratio of 1:1 as a mobile phase, at a flow rate of 0.5mL / min), the resulting spectrum is shown in Figure 5.

As shown in Figure 5, the solid phase extraction column, using the aminated graphene as the solid phase extraction agent, can be used to selectively capture and dissociate the above target components very well, and remove the impurity of xylene cyanol FF in a better way.

### Embodiment 4

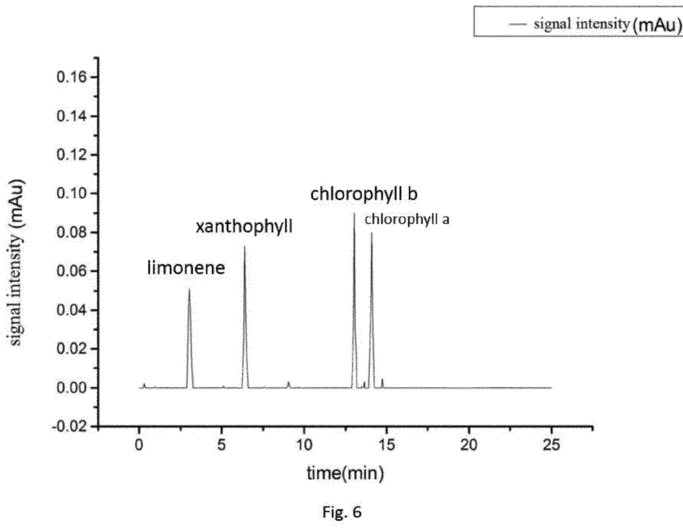

1. A plurality of solid phase extraction agents to be selected are added into dichloromethane to prepare a plurality of dispersive liquids of the solid phase extraction agents, at a concentration of 0.5 mg / mL. Then pure products of the detected target components in the sample to be detected are combined with the solvent, to prepare a series of dispersive liquids of target components, with a gradient of 0.5 mg / mL, at a concentration of 0.5 mg / mL to 5 mg / mL. Wherein the pure products of the target components are respectively xanthophyll, chlorophyll b, chlorophyll a and limonene. The dispersive liquids of solid phase extraction agents and the dispersive liquids of target components are mixed at a volume ratio of 1: 1 respectively to obtain a plurality of mixtures. 5 mL of each mixture is taken to be ultrasonically dispersed. After the mixture is settled for 60 minutes, the mixture containing dodecylated graphene has the lowest sedimentation level, and thus the dodecylated graphene is selected as a solid phase extraction agent.
2. The dodecylated graphene is used as a solid phase extraction agent. The dodecylated graphene is loosely loaded into a polypropylene plastic column with one end sealed with a porous alumina sieve plate. A volume of the solid phase extraction agent is 1/6 of a volume of the polypropylene plastic column and then the polypropylene plastic column is sealed by another porous alumina sieve plate. The polypropylene plastic column filled with the dodecylated graphene is vibrated on a shaking table for 3 min, and then the porous alumina sieve plate is gently pressed to compact the solid phase extraction agent, in order to obtain a solid phase extraction column.
3. The working solutions of xanthophyll, chlorophyll b, chlorophyll a and limonene are prepared respectively. The solvent for each working solution is ethyl acetate, at a concentration of 100ug / L. Then congo red is added as an impurity component, at a concentration of 1mg / L.
4. The mixed solvent of dichloromethane and petroleum ether at a volume ratio of 1: 2 is added into the solid phase extraction column to activate the solid phase extraction column, at a flow rate of 2 mL / min. A volume of the mixed solvent is the same as that of the polypropylene plastic column.
5. 100 mL of the working solutions are taken and injected respectively into the solid phase extraction column after activation, to load a sample. A volume of the working solution is 1 time the volume of the polypropylene plastic column and a flow rate is 0.5 mL / min.
6. The solid phase extraction agent is eluted with a mixed solvent of chloroform and dichloromethane at a volume ratio of 1: 2. A volume of the mix solvent is 1 time the volume of the polypropylene plastic column and a flow rate is 0.1 mL / min.
7. 0.5 mL of a mixed solution of ethyl acetate and petroleum ether at a volume ratio of 2: 1 is eluted to obtain an eluted solution. A volume of the mixed solution is 1/4 of the volume of the polypropylene plastic column and a flow rate of the mixed solution is 0.8 mL / min.
8. The eluted solution is dried by nitrogen to obtain a dried product, and then 1mL of chloroform is used for solving it, and 20uL of sample is taken for liquid chromatography analysis (using an Agilent 1100 High Performance Liquid Chromatography Station, with a mixed solvent of methanol and water at a volume ratio of 4:1 as a mobile phase, at a flow rate of 0.5mL / min), the resulting spectrum is shown in Figure 6.

As shown in Figure 6, the solid phase extraction column, using the dodecylated graphene as the solid phase extraction agent, can be used to selectively capture and dissociate the above target components very well, and remove the congo red in a better way.

### Embodiment 5

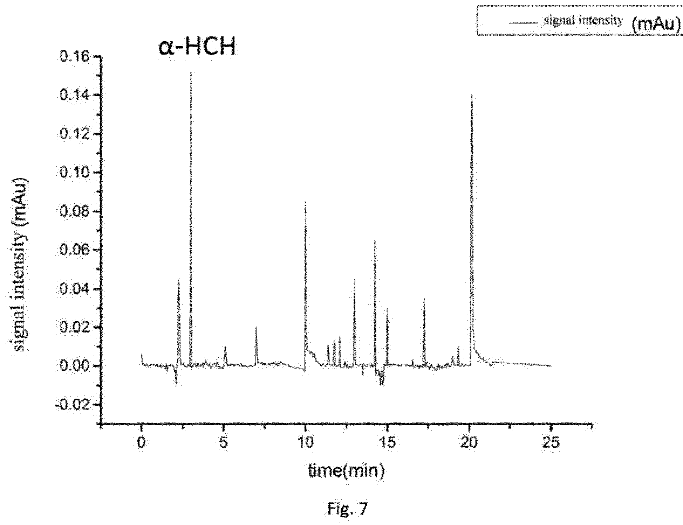

1. A plurality of solid phase extraction agents to be selected are added into dichloromethane to prepare a plurality of dispersive liquids of solid phase extraction agents at a concentration of 0.5 mg / mL. Then a pure product of the target component detected in the sample to be detected, combined with the solvent to prepare a series of dispersive liquids of the target component, with a gradient of 0.5 mg / mL, at a concentration of 0.5 mg / mL to 5 mg / mL. Wherein the pure product of the target component is α-HCH. The dispersive liquids of solid phase extraction agents and the dispersive liquids of target component are mixed at a volume ratio of 1: 1 respectively to obtain a plurality of mixtures. 1 mL of each mixture is taken to be ultrasonically dispersed. After the mixture is settled for 60 minutes, the mixture containing dodecylated graphene has the lowest sedimentation level, and thus the dodecylated graphene is selected as a solid phase extraction agent.
2. The dodecylated graphene is used as a solid phase extraction agent. The dodecylated graphene is loosely loaded into a polypropylene plastic column with one end sealed with a porous alumina sieve plate. A volume of the solid phase extraction agent is 1/6 of the volume of the polypropylene plastic column and then the polypropylene plastic column is sealed by another porous alumina sieve plate. The polypropylene plastic column filled with the dodecylated graphene is vibrated on a shaking table for 3 min, and then the porous alumina sieve plate is gently pressed to compact the solid phase extraction agent, in order to obtain a solid phase extraction column.
3. A sample of tea stained with the α-HCH is smashed and then goes through 50 mesh to obtain tea powder. 2.5 g of the tea powder is added into 20 mL of a mixture of n-hexane-acetone (a volume ratio of n-hexane and acetone is 97.5: 2.5) for extraction, then the mixture is shaken and extracted on a shaking table at 45 ° C for 40 min to obtain an extract.
4. The hydrochloric acid with a mass fraction of 37% is added into the solid phase extraction column to activate the solid phase extraction column, at a flow rate of 0.5 mL / min. A volume of the hydrochloric acid is 1 time the volume of the polypropylene plastic column.
5. 5 mL of the extract is taken and injected into the solid phase extraction column after activation, to load a sample. A volume of the extract is 1/8 of a volume of the polypropylene plastic column and a flow rate is 1 mL / min.
6. The solid phase extraction agent is eluted with acetonitrile. A volume of acetonitrile is 1 time a volume of the polypropylene plastic column and a flow rate is 1 mL / min.
7. 25 mL of a mixed solution of ethyl acetate and petroleum ether at a volume ratio of 1: 9 is eluted to obtain an eluted solution. The pigment of the tea leaves is retained in the eluted solution, while the pesticide residues and other ingredients in the tea leaves are removed. Wherein a volume of the mixed solution is 1/4 of a volume of the polypropylene plastic column and a flow rate of the mixed solution is 1 mL / min.
8. The eluted solution is dried by nitrogen to obtain a dried product and 1mL of n-hexane is used for solving it. 20uL of this solution is taken for liquid chromatography analysis (using an Agilent 1100 High Performance Liquid Chromatography Station, with a mixed solvent of acetonitrile and water at a volume ratio of 1:1 as a mobile phase, at a flow rate of 0.5mL / min). Additional α-HCH is taken to prepare 100ng / mL of pesticide sample solution. 20uL of the sample solution is used to calibrate the α-HCH in the tea samples. The final calibration spectrum is shown in Fig. 7, without an interference from the pigment and impurity. The α-HCH can also be eluted effectively, which proves that the graphene solid-phase extraction column effectively performs its function of removing the pigment and impurity.

### Embodiment 6

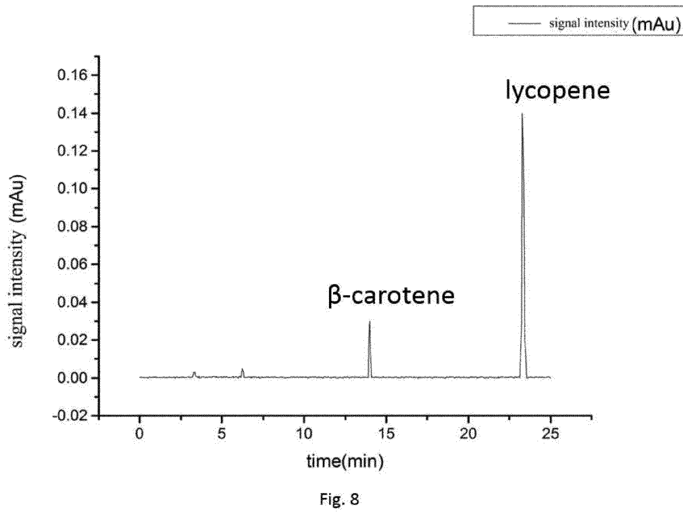

1. A plurality of solid phase extraction agents to be selected are added into dichloromethane to prepare a plurality of dispersive liquids of solid phase extraction agents at a concentration of 0.5 mg / mL. Then pure products of the target components detected in the sample to be detected, combined with the solvent to prepare a series of dispersive liquids of target components, with a gradient of 0.5 mg / mL, at a concentration of 0.5 mg / mL to 5 mg / mL. Wherein the pure products of the target components are respectively xanthophyll, chlorophyll b, chlorophyll a and limonene. The dispersive liquids of solid phase extraction agents and the dispersive liquids of the target components are mixed at a volume ratio of 1: 1 respectively to obtain a plurality of mixtures. 5 mL of each mixture is taken to be ultrasonically dispersed. After the mixture is settled for 60 minutes, the mixture containing dodecylated graphene has the lowest sedimentation level, and thus the dodecylated graphene is selected as a solid phase extraction agent.
2. The dodecylated graphene is used as a solid phase extraction agent. The dodecylated graphene is loosely loaded into a polypropylene plastic column with one end sealed with a porous alumina sieve plate. A volume of the solid phase extraction agent is 1/6 of a volume of the polypropylene plastic column and then the polypropylene plastic column is sealed by another porous alumina sieve plate. The polypropylene plastic column filled with the dodecylated graphene is vibrated on a shaking table for 3 min, and then the porous alumina sieve plate is gently pressed to compact the solid phase extraction agent, in order to obtain a solid phase extraction column.
3. The tomato sample is cut into pieces and pulverized into a homogenized slurry. Then, 0.5 g of tomato pulp is added into 10 ml of acetone, and the mixture is extracted under 120 w of ultrasonic. After 10 min, the tomato residue is filtered out to obtain an extract.
4. A mixed solvent of dichloromethane and chloroform at a volume ratio of 1: 2 is added into the solid phase extraction column to activate the solid phase extraction column, at a flow rate of 0.8 mL / min, and a volume of the mixed solvent is 1 time a volume of the polypropylene plastic column.
5. 2 mL of the extract is taken and injected into the solid phase extraction column after activation, to load the sample. A volume of the extract is 1/9 of a volume of the polypropylene plastic column and a flow rate is 1 mL / min.
6. The solid phase extraction agent is eluted with 5 mL of 10% sodium carbonate solution, and then eluted with 5 mL of 37% hydrochloric acid. The effluent containing impurities is discarded after eluting. Wherein a total volume of sodium carbonate solution and hydrochloric acid is 1 time a volume of the polypropylene plastic column, a flow rate of sodium carbonate solution is 0.5mL / min, and a flow rate of hydrochloric acid is 0.5mL / min.
7. Finally, the pigment is eluted with 15 mL of n-hexane to obtain an eluted solution. A volume of n-hexane is 1/6 of a volume of the polypropylene plastic column and a flow rate of n-hexane is 0.3 mL / min.
8. The eluted solution is dried by nitrogen to obtain a dried product and 1mL of n-hexane is used for solving it. 20uL of this solution is taken for liquid chromatography analysis (using an Agilent 1100 High Performance Liquid Chromatography Station, with a mixed solvent of acetonitrile and water at a volume ratio of 1:1 as a mobile phase, at a flow rate of 0.5mL / min). The spectrum is shown in Fig. 8. It is proved that the lycopene and the β-carotene in the tomato can be retained effectively by the graphene solid phase extraction column. The organic acid in the tomato fruit can also be eluted effectively by eluting, without an interference with the subsequent chromatogram.

## Claims

1. A preparation method of a solid phase extraction column, comprising:
selecting one solid phase extraction agent from a plurality of solid phase extraction agents to be selected, wherein the solid phase extraction agent to be selected is graphene or modified graphene; the graphene is single-layer graphene or multi-layer graphene; the modified graphene is selected from at least one of aminated graphene, carbonylated graphene, cyanided graphene, nitro-graphene, boric acid graphene, phosphorylated graphene, hydroxy graphene, thiol graphene, methylated graphene, allylated graphene, trifluoro methylated graphene, dodecylated graphene, octadecyl graphene, fluorinated graphene, brominated graphene, chlorinated graphene and iodinated graphene;
loading a selected solid phase extraction agent into the separation column, vibrating the separation column filled with the selected solid phase extraction agent for 3 minutes in shaking table, and compacting the solid phase extraction agent to obtain the solid phase extraction column; wherein a specific method of selecting one solid phase extraction agent from the plurality of solid phase extraction agents to be selected comprises:
preparing the plurality of solid phase extraction agents to be selected to form a plurality of dispersive liquids of the solid phase extraction agent respectively;
preparing a pure product of target component detected in a sample to be tested to form a plurality of dispersive liquids of the target component;
mixing the plurality of dispersive liquids of the solid phase extraction agent with the plurality of dispersive liquids of the target component to obtain a plurality of mixtures;
ultrasonically dispersing each of the mixtures;
selecting a solid phase extraction agent in a mixture with a lowest sedimentation level after the mixtures are settled;
the solid phase extraction agent to be selected is graphene or modified graphene; the graphene is single-layer graphene or multi-layer graphene; and the modified graphene is selected from at least one of aminated graphene, carbonylated graphene, cyanided graphene, nitro-graphene, boric acid graphene, phosphorylated graphene, hydroxy graphene, thiol graphene, methylated graphene, allylated graphene, trifluoro methylated graphene, dodecylated graphene, octadecyl graphene, fluorinated graphene, brominated graphene, chlorinated graphene and iodinated graphene;

## Patentansprüche

1. Herstellungsverfahren für eine Festphasen-Extraktionssäule, umfassend:
Auswählen von einem Festphasen-Extraktionsmittel aus einer Vielzahl von Festphasen-Extraktionsmitteln, die ausgewählt werden sollen, wobei das auszuwählende Festphasen-Extraktionsmittel Graphen oder modifiziertes Graphen ist, das Graphen einschichtiges Graphen oder mehrschichtiges Graphen ist, das modifizierte Graphen wird aus mindestens einem Element aus aminiertem Graphen, carbonyliertem Graphen, cyaniertem Graphen, Nitro-Graphen, Borsäure-Graphen, phosphoryliertem Graphen, Hydroxy-Graphen, Thiol-Graphen, methyliertem Graphen, allyliertem Graphen, trifluor-methyliertem Graphen, dodecyliertem Graphen, Octadecyl-Graphen, fluoriertem Graphen, bromiertem Graphen, chloriertem Graphen und iodiertem Graphen ausgewählt;
Laden eines ausgewählten Festphasen-Extraktionsmittels in die Trennsäule, die Trennsäule, die mit dem ausgewählten Festphasen-Extraktionsmittel gefüllt ist, über 3 Minuten in einem Rütteltisch zum Vibrieren bringen, und Verdichten des Festphasen-Extraktionsmittels, um die Festphasen-Extraktionssäule zu erhalten; wobei ein spezifisches Verfahren zum Auswählen von einem Festphasen-Extraktionsmittel aus der Vielzahl von auszuwählenden Festphasen-Extraktionsmitteln umfasst:
Herstellen der Vielzahl von auszuwählenden Festphasen-Extraktionsmitteln, um jeweils eine Vielzahl von dispergierenden Flüssigkeiten des Festphasen-Extraktionsmittels zu bilden;
Herstellen eines reinen Produktes der Zielkomponente, die in einer zu testenden Probe festgestellt wird, um eine Vielzahl von dispergierenden Flüssigkeiten der Zielkomponente zu bilden;
Mischen der Vielzahl von dispergierenden Flüssigkeiten des Festphasen-Extraktionsmittels mit der Vielzahl von dispergierenden Flüssigkeiten der Zielkomponente, um eine Vielzahl von Mischungen zu erhalten;
Dispergieren jeder der Mischungen mittels Ultraschall;
Auswählen eines Festphasen-Extraktionsmittels in einer Mischung mit einem niedrigsten Sedimentationsgrad, nachdem sich die Mischungen gesetzt haben;
das auszuwählende Festphasen-Extraktionsmittel ist Graphen oder modifiziertes Graphen; das Graphen ist einschichtiges Graphen oder mehrschichtiges Graphen; und das modifizierte Graphen wird aus mindestens einem Element aus aminiertem Graphen, carbonyliertem Graphen, cyaniertem Graphen, Nitro-Graphen, Borsäure-Graphen, phosphoryliertem Graphen, Hydroxy-Graphen, Thiol-Graphen, methyliertem Graphen, allyliertem Graphen, trifluor-methyliertem Graphen, dodecyliertem Graphen, Octadecyl-Graphen, fluoriertem Graphen, bromiertem Graphen, chloriertem Graphen und iodiertem Graphen ausgewählt.

## Revendications

1. Méthode de préparation d'une colonne d'extraction en phase solide, comprenant :
sélection d'un agent d'extraction en phase solide à partir d'une pluralité d'agents d'extraction en phase solide à sélectionner, où l'agent d'extraction en phase solide à sélectionner est du graphène ou du graphène modifié ; le graphène est un graphène monocouche ou du graphène multicouche ; le graphène modifié est sélectionné à partir de l'un au moins parmi le graphène aminé, le graphène carbonylé, le graphène cyanuré, le nitro-graphène, le graphène d'acide borique, le graphène phosphorylé, le graphène hydroxy, le graphène thiol, le graphène méthylé, le graphène allylé, le trifluoro-graphène méthylé, le graphène dodécyle, le graphène octadécyle, le graphène fluoré, le graphène bromé, le graphène chloré et le graphène iodé ;
chargement d'un agent d'extraction en phase solide sélectionné dans la colonne de séparation, mise en vibration de la colonne de séparation remplie avec l'agent d'extraction en phase solide sélectionné pendant trois minutes dans une table vibrante, et compactage de l'agent d'extraction en phase solide pour obtenir la colonne d'extraction en phase solide ; où une méthode spécifique de sélection d'un agent d'extraction en phase solide à partir de la pluralité d'agents d'extraction en phase solide à sélectionner comprend :
la préparation de la pluralité d'agents d'extraction en phase solide à sélectionner pour former une pluralité de liquides dispersifs de l'agent d'extraction en phase solide respectivement ;
la préparation d'un produit pur de composant cible détecté dans un échantillon à tester pour former une pluralité de liquides dispersifs du composant cible ;
le mélange de la pluralité de liquides dispersifs de l'agent d'extraction en phase solide avec la pluralité de liquides dispersifs du composant cible pour obtenir une pluralité de mélanges ;
la dispersion ultrasonique de chacun des mélanges ;
la sélection d'un agent d'extraction en phase solide dans un mélange avec un niveau de sédimentation le plus faible après décantation des mélanges ;
l'agent d'extraction en phase solide à sélectionner est du graphène ou du graphène modifié ; le graphène est un graphène monocouche ou du graphène multicouche ; et le graphène modifié est sélectionné à partir de l'un au moins parmi le graphène aminé, le graphène carbonylé, le graphène cyanuré, le nitro-graphène, le graphène d'acide borique, le graphène phosphorylé, le graphène hydroxy, le graphène thiol, le graphène méthylé, le graphène allylé, le trifluoro-graphène méthylé, le graphène dodécyle, le graphène octadécyle, le graphène fluoré, le graphène bromé, le graphène chloré et le graphène iodé.
